# EUROPÄISCHE PATENTSCHRIFT

(11) **EP 3 481 736 B1**
(45) Veröffentlichungstag und Bekanntmachung des Hinweises auf die Patenterteilung: **06.07.2022**
(21) Anmeldenummer: 17725224.4
(22) Anmeldetag: 19.05.2017
(51) Int. Cl.: B65D 21/06, B65D 81/26

(54) **STAPELBARER BEHÄLTER MIT MITTELN ZUR BODENSEITIGEN FLÜSSIGKEITSABFUHR**
STACKABLE CONTAINER HAVING MEANS FOR REMOVING LIQUID AT THE BOTTOM
RÉCIPIENT EMPILABLE COMPRENANT DES MOYENS D'ÉVACUATION DE LIQUIDE DU CÔTÉ DU FOND

(30) Priorität: 06.07.2016 DE 102016112399
(43) Veröffentlichungstag der Anmeldung: 15.05.2019
(73) Patentinhaber: H2 Innovation GmbH, 93087 Alteglofsheim (DE)
(72) Erfinder: HURT, Nathaly Hubertine, 93087 Alteglofsheim (DE); ULLIUS, Heinrich, 93087 Alteglofsheim (DE)
(74) Vertreter: Glück Kritzenberger Patentanwälte PartGmbB
(86) Internationale Anmeldenummer: PCT/EP2017/062139
(87) Internationale Veröffentlichungsnummer: WO 2018/007064

(56) Entgegenhaltungen:
- EP-A1- 0 749 907
- DE-C- 807 074
- DE-U1- 8 118 115
- DE-U1-202010 000 632
- FR-A- 1 102 828
- NL-A- 8 104 492
- NL-A- 8 105 429

## Beschreibung

### Technisches Gebiet

### STAPELBARER BEHÄLTER MIT MITTELN ZUR BODENSEITIGEN FLÜSSIGKEITSABFUHR

### Stand der Technik

Behälter zur Aufnahme verschiedenster Güter, beispielsweise Transport- und Lagerbehälter für den Transport und die Lagerung von Gütern sind aus dem Stand der Technik hinreichend bekannt. Die Behälter sind häufig auch stapelbar ausgebildet und können im Gebrauchszustand zur Lagerung der Güter unter Bildung eines Behälterstapels aufeinandergestapelt werden.

Um im Leerzustand, welcher auch als Nichtgebrauchszustand bezeichnet werden kann, einen möglichst geringen Platzbedarf aufzuweisen, sind bekannte stapelbare Transport-und Lagerbehälter oft zusammenfaltbar oder zusammenklappbar ausgebildet. Ferner werden diesbezüglich im Stand der Technik Transport- und Lagerbehälter vorgeschlagen, die derart ausgeführt sind, dass im Nichtgebrauchszustand bzw. in einer Nichtgebrauchsstellung ein Ineinanderstapeln und in Gebrauchsstellung ein Aufeinanderstapeln der Transport- und Lagerbehälter möglich ist.

Beispielsweise beschreibt die DE 20 2010 000 632 U1 einen Transportbehälter, bei dem die Seitenwände sich nach unten hin konisch verjüngen und bei dem an einer Oberseite schwenkbare Stützen vorgesehen sind, die in Gebrauchsstellung in eine Stützposition verschwenkt werden können, in der sie als Auflager für einen gleichartigen, zweiten zu stapelnden Transportbehälter dienen.

Ebenso beschreibt die G 81 18 115 U1 einen Behälter mit einem sich zum oberen Rand hin konisch erweiternden Querschnitt und mit unter den Behälterboden einklappbaren Füßen, welche im ausgeklappten Zustand ein Aufsetzen des Behälters auf dem Rand eines gleichartigen Behälters und im eingeklappten Zustand ein Einsetzen des Behälters in einen gleichartigen Behälter zulassen. FR 1 102 828 A und NL 8 104 492 A offenbaren weitere Behälter.

Je nach Verwendungszweck und in Abhängigkeit des aufzunehmenden, beispielsweise zu transportierenden und/oder zu lagernden Gutes können die Behälter beispielsweise geschlossen bzw. vollverschlossen oder aber luftdurchlässig und/oder oberseitig offen ausgebildet sein.

Ein Problem ergibt sich häufig bei der Verwendung von Behältern im Freien, beispielsweise zur Lagerung von Lagergut im Freien oder zur Nutzung für Gartenbau- oder Gartengestaltungszwecke. Sowohl bei einer Freiluftlagerung, wie sie beispielsweise für Brennholz oder Scheitholz in der Regel notwendig ist, als auch beispielsweise bei der Verwendung als Pflanzkübel ist ein zentraler Aspekt für die Ausgestaltung entsprechender Behälter darin zu sehen, dass sich Feuchtigkeit und/oder Flüssigkeit wie z.B. Niederschlagswasser nicht anstaut. Neben dem Vermeiden von Staunässe ist dabei zudem auf eine gute Durchlüftung zu achten. Aus den genannten Gründen besteht trotz der aus dem Stand der Technik bekannten Lösungen weiterer Bedarf an derartigen Behältern.

### Darstellung der Erfindung

Aufgabe der vorliegenden Erfindung ist es daher einen stapelbaren Behälter zur Verfügung zu stellen, der die Nachteile des Standes der Technik überwindet, bei dem insbesondere bei der Verwendung im Freien ein Nässestau im Aufnahmeraum effektiv verhindert wird und der eine effektive Durchlüftung zulässt. Diese Aufgabe wird erfindungsgemäß durch eine stapelbaren Behälter gemäß dem unabhängigem Anspruch 1 gelöst. Weitere vorteilhafte Aspekte, Details und Ausgestaltungen der Erfindung ergeben sich aus den abhängigen Ansprüchen, der Beschreibung sowie den Zeichnungen.

Die vorliegende Erfindung stellt einen stapelbaren Behälter umfassend einen Aufnahmekörper zur Verfügung. Der Aufnahmekörper umfasst zumindest einen Boden und einen vom Boden und einer seitlichen Wandung begrenzten Aufnahmeraum, und weist beweglich angeordnete Stapelelemente auf. Die Stapelelemente sind wenigstens von einer ersten Position in eine zweite Position bewegbar, wobei die Stapelelemente in der ersten Position ein Ineinanderstapeln und in der zweiten Position das Aufeinanderstapeln zumindest zweier derartiger stapelbarer Behälter erlauben. Der erfindungsgemäße Behälter zeichnet sich insbesondere dadurch aus, dass der Aufnahmekörper im Bereich des Bodens wenigstens eine Entwässerungsöffnung aufweist, wobei der Boden des Aufnahmekörpers zur Aufnahme der in dem Aufnahmeraum vorhandenen Feuchtigkeit und/oder Flüssigkeit und zur Führung der aufgenommenen Feuchtigkeit und/oder Flüssigkeit in Richtung der wenigstens einen Entwässerungsöffnung ausgebildet ist, und dass zumindest eines der Stapelelemente eine Entwässerungsrinne aufweist, die zur Aufnahme und zum Ableiten von Feuchtigkeit und/oder Flüssigkeit ausgebildet ist, und dass die Stapelelemente ferner einen mit der Entwässerungsrinne in kommunizierender Verbindung stehende Durchlass zum gezielten Führen der in der Entwässerungsrinne gesammelten Flüssigkeit von einer ersten Seite der Stapelelemente zu einer gegenüberliegenden zweiten Seite der Stapelelemente aufweisen.

Die beweglich, insbesondere dreh- und/oder schwenkbeweglich oder verschiebbar am Aufnahmekörper des vorliegenden stapelbaren Behälters angeordneten Stapelelemente können schnell und einfach derart verstellt bzw. bewegt werden, dass sie zumindest zwei Positionen einnehmen. Sofern die Stapelelemente in einer ersten Position orientiert sind, kann jeder Behälter einen weiteren derartig ausgebildeten Behälter aufnehmen bzw. von einem solchen aufgenommen werden. In ihrer ersten Position erlauben die Stapelelemente somit das Ineinanderstapeln mehrerer gleichartiger Behälter, wobei dieser ineinander gestapelte Zustand auch als Nichtgebrauchszustand oder Nichtgebrauchsstellung verstanden werden kann. Im Gegensatz dazu erlauben die Stapelelemente in ihrer zweiten Position die Auflagerung eines Behälters auf einen gleichartigen Behälter, d.h. sie sperren damit das Ineinanderstapeln zumindest zweier gleichartiger Behälter. Dies wird vorliegend auch als Gebrauchszustand verstanden.

Unter einer im Bereich des Bodens angeordneten Entwässerungsöffnung wird vorliegend verstanden, dass die Entwässerungsöffnung im Boden oder an einem Übergang vom Boden zur Wandung oder in einem an den Boden anschließenden Abschnitt der Wandung, der unmittelbar dem Übergang zwischen Boden und Wandung folgt, angeordnet ist. Eine am Übergang vom Boden zur Wandung angeordnete Entwässerungsöffnung kann somit auch zwei Öffnungsabschnitte aufweisen, wobei ein erster Öffnungsabschnitt im Boden und ein zweiter Öffnungsabschnitt in der Wandung ausgebildet ist.

Aufgrund der im Bereich des Bodens des Aufnahmekörpers ausgebildeten Entwässerungsöffnung in Verbindung mit der besonderen Ausgestaltung des Bodens und in Zusammenwirkung mit den Entwässerungsrinnen der Stapelelemente kann im Gebrauchszustand der stapelbaren Behälter ganz besonders vorteilhaft ein Austrag von Feuchtigkeit und/oder Flüssigkeit aus dem Aufnahmeraum bzw. eine Entwässerung des Aufnahmeraumes erfolgen, so dass der vorliegende stapelbare Behälter ganz besonders vorteilhaft auch im Freien verwendet werden kann. Die sich im Aufnahmeraum niederschlagende bzw. sammelnde Flüssigkeit wird dabei zu der wenigstens einen Entwässerungsöffnung geleitet und kann dort entsprechend austreten, wobei die zumindest eine Entwässerungsrinne wenigstens eines Stapelelementes, zumindest in Gebrauchsstellung des Behälters, so angeordnet ist, dass die aus einer Entwässerungsöffnung austretende Flüssigkeit direkt in die Entwässerungsrinne gelangt und über diese abgeleitet werden kann.

Beispielsweise kann kondensiertes Tauwasser oder auch eindringendes Niederschlagswasser effektiv aus dem Aufnahmeraum eines Behälters abgeleitet werden, und zwar derart, dass das abfließende Wasser nicht in einen benachbart und/oder unterhalb angeordneten Behälter eingeleitet wird. Ganz besondere Vorteile ergeben sich dabei zum Beispiel für die Lagerung von Brennholz oder aber bei der Verwendung der Behälter als Pflanzkübel bzw. Anzucht- und/oder Pflanzbehälter.

In bevorzugten Ausführungsformen können die Behälter auch so ausgeführt sein, dass im Gebrauchszustand der Behälter das Ableiten oder Abführen von Flüssigkeit aus dem Behälterstapel gezielt mittels vorgesehener Fluidkanäle oder Fluidleitungen erfolgt, die mit den Entwässerungsrinnen und/oder den Entwässerungsöffnungen in korrespondierender Verbindung stehen. Das Ableiten der Flüssigkeit kann dabei entweder an einer Innenseite der Wandungen der Behälter oder an einer Außenseite der Wandungen der Behälter realisiert werden. Alternativ ist es auch möglich, dass die sich in den Behältern eines Behälterstapels sammelnde Flüssigkeit gezielt in den untersten Behälter eines Stapels eingeleitet wird und dort beispielsweise durch Verschließen der Entwässerungsöffnungen gesammelt werden kann.

Bevorzugt weist der Aufnahmekörper mehrere Entwässerungsöffnungen auf, wobei die vorgesehenen Entwässerungsöffnungen benachbart zu der Wandung im Boden angeordnet oder in einem Anschlussbereich der Wandung an den Boden ausgebildet sind. Bei der Anordnung und Verteilung der Entwässerungsöffnungen ist lediglich sicherzustellen, dass jede Entwässerungsöffnung in Gebrauchsstellung des Behälters mit einer Entwässerungsrinne eines Stapelelementes zusammenwirkt und austretende Flüssigkeit daher entsprechend in einer Entwässerungsrinne aufgefangen wird. Die Entwässerungsöffnungen sind beispielsweise in Form von einfachen Bohrungen ausgebildet und können verschiedenste Querschnittsformen, wie zum Beispiel runde, ovale oder polygonale Querschnittsformen aufweisen oder schlitzförmig ausgebildet sein. Die Größe bzw. Querschnittsfläche der Entwässerungsöffnungen ist dabei vorzugsweise um ein Vielfaches geringer als die Fläche des Bodens, so dass die Gesamtfläche aller Entwässerungsöffnungen beispielsweise lediglich einen Bruchteil der Bodenfläche einnimmt.

In alternativen Ausführungsformen ist es auch denkbar die wenigstens eine oder die mehreren Entwässerungsöffnungen eines bestimmten Behälters innerhalb eines Behälterstapels aus aufeinander gestapelten Behältern verschließbar auszuführen. Dazu können beispielsweise einfache Stopfen oder Verschlussdeckel vorgesehen sein oder regulierbare Verschlüsse mit einem einstellbaren Ventil, über die beispielsweise zusätzlich ein Ablaufschlauch und/oder ein Hahn anschließbar ist. Insbesondere bei der Verwendung der Behälter als Pflanz- oder Anzuchtbehälter erweist sich dies als vorteilhaft, da beispielsweise ein Überschuss an Gießwasser aus den Behältern eines Behälterstapels abgeleitet und in einem beispielsweise nicht bepflanzten Behälter gesammelt und von dort aus wieder verwertet werden kann. Das gesammelte Wasser kann so z.B. auch zur Bewässerung anderer, benachbarter oder in erreichbarer Nähe aufgestellter Behälterstapel verwendet werden, indem beispielsweise ein geeignetes Leitungs- oder Transportsystem für die Verteilung des gesammelten Wassers verwendet wird. Beispielsweise kann dazu ein entsprechend ausgebildetes Schlauch- und/oder Pumpsystem eingesetzt werden. Es versteht sich von selbst, dass das gesammelte Wasser zur Bewässerung von Behältern verwendet kann, die auf unterschiedlichen Ebenen desselben oder weiterer Behälterstapel angeordnet sind.

In gleicher Weise ist es möglich, dass ein Behälter mit derartig verschlossenen Entwässerungsöffnungen einen Wasserspeicher oder Wasservorrat bildet und somit als Grundlage für ein Bewässerungssystem bzw. für eine selbsttätige Tropfbewässerung dient, um die weiteren bepflanzten Behälter im Behälterstapel oder auch weitere bepflanzte Behälter in benachbarten oder in erreichbarer Nähe aufgestellten Behälterstapeln bedarfsgerecht zu bewässern.

Besondere Vorteile ergeben sich, wenn der Boden gewölbt ausgebildet ist. Additiv oder alternativ kann der Boden vorzugsweise auch geneigt ausgebildet sein. Durch eine geneigte oder gewölbte Ausgestaltung des Bodens kann beispielsweise sichergestellt werden, dass sich die im Aufnahmeraum vorhandene Flüssigkeit oder Feuchtigkeit, die sich auf dem Boden niederschlägt bzw. sammelt in Richtung der Wandung fließt und zumindest abschnittsweise entlang der Wandung aufgenommen wird. Besonders bevorzugt weist der Boden dabei eine in Richtung des Aufnahmeraumes ragende konvexe Wölbung auf. Beispielsweise ist auch ein konkav-konvex gewölbter Boden möglich. Je nach Anordnung und Lage der Entwässerungsöffnungen kann auch ein konkav gewölbter Boden denkbar sein. Insbesondere durch Abstimmen der Wölbung oder der Neigung mit der Position der Entwässerungsöffnungen kann ein besonders effektiver Flüssigkeitsaustritt aus dem Aufnahmeraum bewirkt werden.

Besonders bevorzugt umfasst der Boden wenigstens zwei aneinander anschließende, geneigte Bodenabschnitte, wobei die Bodenabschnitte an einem höheren Niveaupunkt aneinander anschließen und jeweils mit einem vorgegebenen Neigungswinkel in Richtung der Wandung zu einem tieferen Niveaupunkt hin abfallen. In dieser bevorzugten Ausgestaltung des Bodens können Anzahl an Entwässerungsöffnungen und Anzahl sowie Neigung der Bodenabschnitte derart aufeinander abgestimmt werden, dass ein effektiver Wasseraustrag erfolgt.

Gemäß einer besonders bevorzugten Ausführungsform der Erfindung ist der Aufnahmekörper im Wesentlichen in Form eines Pyramidenstumpfes mit einer polygonalen, vorzugsweise rechteckigen, insbesondere quadratischen oder vorzugsweise dreieckigen Grundfläche ausgebildet. Ebenso bevorzugt kann der Aufnahmekörper in alternativen Ausführungsformen im Wesentlichen kegelstumpfförmig ausgebildet sein und eine runde oder ovale Grundfläche aufweisen. Die als Grundfläche bezeichnete, größere der beiden parallelen Flächen des Pyramidenstumpfes oder Kegelstumpfes definiert dabei eine gedachte obere Fläche des Aufnahmekörpers, welche offen ausgebildet ist und eine oberseitige Öffnung des Aufnahmekörpers bildet. Die kleinere der beiden parallelen Flächen des Pyramidenstumpfes oder Kegelstumpfes, bildet den Boden des Aufnahmekörpers. Durch den pyramidenstumpfförmigen oder kegelstumpfförmigen Aufnahmekörper ist das Ineinanderstapeln mehrerer Behälter in der Nichtgebrauchsstellung besonders einfach möglich, wobei insbesondere durch ein vorgegebenes Verhältnis der Größe der Flächen der Grad des Ineinanderstapelns variiert werden kann.

Durch einen pyramidenstumpfförmigen Aufnahmekörper mit einer quadratischen Grundfläche ergeben sich besondere Vorteile für die Lagerung von Brennholz. Brennholz mit einer in der Regel durchschnittlichen Scheitlänge von 25 cm bis 33 cm kann dabei besonders einfach und geordnet in den Aufnahmeraum eingeschichtet werden, wenn der Boden des Aufnahmekörpers eine Kantenlänge von rund 33 cm bis 35 cm hat.

In Ausführungsformen mit einem pyramidenstumpfförmigen Aufnahmekörper mit einer quadratischen Grundfläche umfasst der Aufnahmkörper insbesondere bevorzugt vier rechtwinkelig aneinander anschließende seitliche Wandungsabschnitte, wobei wenigstens ein erster Wandungsabschnitt eine Durchbrechung aufweist. Die Durchbrechung kann sowohl als Sichtfenster dienen als auch als Eingriffsöffnung, beispielsweise um Lagergut auch in Gebrauchsstellung in einem Stapel aus Behältern in den Aufnahmeraum hinein bzw. aus dem Aufnahmeraum heraus nehmen zu können. Die Durchbrechung kann in besonders bevorzugten Ausführungsformen nahezu über die gesamte Fläche des ersten Wandungsabschnittes ausgeführt sein. Die Durchbrechung kann insbesondere bei der Verwendung des Behälters als Pflanzkübel auch die Funktion einer Belichtungsöffnung erfüllen. Beispielsweise können Blatt- und Blütenanteile von rankenden oder hängenden Pflanzen, die in einen teilweise mit Pflanzerde befüllten Behälter gepflanzt sind, auch durch die Durchbrechung hindurch nach außen geführt sein.

Bei den beschriebenen Ausführungsvarianten in Form von Pflanzkübeln, können zusätzlich Rankgitter vorgesehen sein, die an den Behältern eines Behälterstapels befestigbar sind und daher auch ein nach oben gerichtetes Ranken der Pflanzen erlauben. Ganz besonders bevorzugt können die Rankgitter dabei so ausgeführt sein, dass jedes Rankgitter gleichzeitig an mehreren, vorzugsweise an allen Behältern eines Behälterstapels befestigt werden kann. In diesen bevorzugten Varianten dient ein mit mehreren Behältern eines Behälterstapels verbundenes Rankgitter besonders vorteilhaft gleichzeitig als Stabilisierungselement zur Stabilisierung des Behälterstapels. Das Rankgitter und Stabilisierungselement kann beispielsweise leiterartig ausgebildet sein und zwei in Gebrauchsstellung im Wesentlichen vertikal orientierte Längsstäbe sowie mehrere daran befestigte, waagrechte Querstäbe aufweisen. Unter im Wesentlichen vertikal verlaufenden Längsstäben wird vorliegend verstanden, dass die Längsstäbe in Bezug auf einen Behälterstapel in einer Richtung von oben nach unten verlaufen, wobei die Längsstäbe so orientiert sein können, dass sie zur Vertikalen einen Winkel in einem Bereich von 0° bis 30° vorzugsweise von 10° bis 20° einschließen. Ebenso können die waagrechten Querstäbe so orientiert sein, dass sie mit der Horizontalen einen Winkel in einem Bereich von 0° bis 30° oder von 10° bis 20° einschließen. Die Längs- und Querstäbe zueinander können im Wesentlichen einen beliebigen spitzen Winkel einschließen. Beispielsweise schließen Quer-und Längsstäbe einen Winkel von 30° oder von 60° ein. Alternativ kann das Rankgitter und Stabilisierungselement auch als Spaliergitter mit mehreren parallel verlaufenden Längsstäben und mehreren senkrecht dazu verlaufenden Querstäben ausgebildet sein. Ebenso sind Ausgestaltungen möglich, in denen die Längsstäbe schräg zueinander verlaufen, wobei das Stabilisierungselement im Wesentlichen ein V-förmiges Spalier ausbildet. Auch kann das Stabilisierungselement als Scherenspalier ausgeführt sein. Gemäß einer alternativen bevorzugten Ausführungsform kann das Rankgitter und Stabilisierungselement in Form einer rahmenartigen Struktur ausgebildet sein, wobei die rahmenartige Struktur beispielsweise einen Rahmen sowie frei und unregelmäßig geformte, innerhalb oder an dem Rahmen angeordnete Stütz- und/oder Designelemente aufweist.

Ebenso können weitere Durchbrechungen in weiteren Wandungsabschnitten und/oder auch mehrere Durchbrechungen innerhalb eines Wandungsabschnittes vorgesehen sein. Beispielsweise können die Wandungsabschnitte vorperforiert ausgebildet sein, derart, dass durch Ausbrechen von Flächenabschnitten entlang der vorgesehenen Perforation je nach Bedarf eine gewünschte Anzahl und/oder ein gewünschtes Muster von Durchbrechungen erzeugt werden kann. Es versteht sich von selbst, dass auch bei einer durchgehenden Wandung eine oder mehrere Durchbrechungen in der Wandung vorgesehen sein können. Die Form der Durchbrechungen kann beliebig sein, beispielsweise sind runde, ovale, polygonartige, herz- oder blumenförmige oder unregelmäßig geformte Durchbrechungen möglich.

Besonders bevorzugt sind die Durchbrechungen in einem oberen, vom Boden abgewandten Bereich der Wandung, welcher von oben her an den Behälterrandabschnitt anschließt, angeordnet. Vorzugsweise sind die Durchbrechungen in einer vom Behälterrandabschnitt ausgehenden oberen Hälfte oder in oberen zwei Dritteln der Wandungsfläche angeordnet.

Dadurch wird bewirkt, dass der an den Boden anschließende Bereich der Wandung geschlossen ausgebildet ist. Insbesondere bei Verwendung der Behälter als Pflanz- oder Anzuchtbehälter ist dadurch die Aufnahme von Pflanzerde bzw. Pflanzgranulat im unteren Bereich des Aufnahmeraumes ermöglicht, ohne Gefahr zu laufen, dass die Pflanzerde bzw. Pflanzgranulat herausgedrängt wird. Die Durchbrechungen nehmen in Bezug auf die Fläche der Wandung bzw. auf die Fläche der Wandungsabschnitte vorzugsweise einen Flächenanteil in einem Bereich von 30% bis 70%, besonders bevorzugt von 40% bis 60% und insbesondere bevorzugt von rund 50% ein, d.h. rund die Hälfte der Wandungsfläche ist durch eine oder mehrere Durchbrechungen gebildet und ist somit nach außen hin offen. Dadurch wird sichergestellt, dass ausreichend Licht zu den im Aufnahmeraum befindlichen Pflanzen eindringen kann.

Besondere Vorteile ergeben sich auch dadurch, dass in der Wandung Belüftungsöffnungen ausgebildet sind und/oder dass die Wandung an einer dem Aufnahmeraum zugewandten Seite Abstandshalter aufweist. Eine gute Durchlüftung des Aufnahmeraumes ist insbesondere im Zusammenspiel von Belüftungsöffnungen in der Wandung zusammen mit der oberseitigen Öffnung des Aufnahmekörpers sichergestellt. Dem Aufnahmeraum zugewandte Abstandshalter an der Wandung verhindern ein Anliegen des aufgenommenen Gutes, beispielsweise Transport- und Lagerguts an der Wandung und unterstützen daher eine ausreichende Luftzirkulation im Aufnahmeraum. Insbesondere für die Lagerung und für die Trocknung von Brennholz ist dies ein besonderer Vorteil.

Die Behälter können aus Kunststoff, aus Holz, aus einem Holzwerkstoff, aus Verbundmaterial, aus Pappe oder aus einer beliebigen Kombination der genannten Materialien hergestellt sein. Vor allem bei der Verwendung von Pappe oder Holz bzw. Holzwerkstoff kann das Material dabei insbesondere bevorzugt beschichtet sein und vorzugsweise mit einer wasserundurchlässigen Beschichtung versehen sein. Bei der Verwendung der Behälter als Pflanz- bzw. Anzuchtbehälter ergeben sich besondere Vorteile darüber, dass die Behälter aus einem transparenten Material hergestellt sind.

Sowohl im Bereich des Bodens aber auch im Bereich der Wandung können Versteifungen in Form von Rippen oder dergleichen angeformt sein. An der Außenseite der Wandung des Aufnahmekörpers können zudem Stegelemente vorgesehen sein, die als Anschlag beim Ineinanderstapeln der Behälter im Nichtgebrauchszustand dienen und dadurch ein Festsetzen der ineinander gestapelten Behälter durch zu tiefes Ineinanderschlupfen verhindern. Am Boden der Behälter kann zusätzlich ein Stellrand vorgesehen sein, wobei sich besondere Vorteile dadurch ergeben, wenn gleichzeitig im Bereich des in den Stapelelementen, sofern diese an der Oberseite des Aufnahmekörpers angeordnet sind, eine Nut zur Aufnahme des Stellrandes ausgebildet ist. Insbesondere bei pyramidenstumpfförmigen Aufnahmekörpern können Kanten und Ecken gefast und/oder gerundet ausgebildet sein. Besondere Vorteile ergeben sich dadurch, dass die Kanten in den Anschlussbereichen der Wandungsabschnitte gefast sind und mit einer konkaven Wölbung versehen sind, da darüber beispielsweise Wasser gerichtet bzw. geführt außen ablaufen kann.

Beispielsweise kann bei dem stapelbaren Behälter zusätzlich eine Abdeckung oder ein Deckelelement vorgesehen sein, wobei die Abdeckung bzw. das Deckelelement mit einer seitlichen, äußeren Führungsnut ausgestattet sein kann, welche derart ausgebildet ist, dass Flüssigkeit, die auf der Abdeckung bzw. dem Deckelelement auftrifft oder sich niederschlägt, abgeführt wird. Die Führungsnut ist beispielsweise so eingerichtet sein, dass ein Zusammenwirken mit den Entwässerungsrinnen der Stapelelemente möglich ist, so dass darüber eine effektive Entwässerung stattfinden kann. Ebenso ist es möglich, zusätzlich eine Auffangwanne vorzusehen, in der ein Behälter bzw. der unterste Behälter eines Behälterstapels abgestellt wird.

Ferner sind in bevorzugten Ausführungsformen an der seitlichen Wandung, insbesondere bevorzugt außenseitig an der seitlichen Wandung, Rinnen oder Fugen bzw. Rillen vorgesehen, die dazu ausgebildet sind, auf der Wandung aufschlagendes Niederschlagswasser aufzufangen, zu sammeln und in die Entwässerungsrinnen der Stapelelemente einzuleiten. Die Rinnen oder Fugen bzw. Rillen können dabei als integraler Bestandteil des Aufnahmekörpers ausgeführt sein und bereits als Einheit mit dem Aufnahmekörper hergestellt, beispielsweise an der Wandung angeformt werden. Alternativ können Rinnen oder Fugen bzw. Rillen aber auch separat hergestellt sein und über geeignete Verbindungseinrichtungen oder Kopplungseinrichtungen an der Wandung des Aufnahmekörpers angeordnet bzw. mit dieser verbunden werden.

Die Stapelelemente können beispielsweise um eine Schwenkachse verschwenkbar oder aber in Richtung einer Verschiebeachse verschiebbar ausgebildet sein. Ferner können die Stapelelemente an einer Oberseite und/oder an einer Unterseite des Aufnahmekörpers angeordnet sein. Beispielsweise können die Stapelelemente auch über einen kombinierten Auszieh- und Klappmechanismus an dem Aufnahmekörper, insbesondere an der Oberseite des Aufnahmekörpers befestigt sein. In solchen Ausführungsvarianten kann jedes Stapelelement bevorzugt mittels geeigneter Führungsmittel, beispielsweise über Teleskopschienen oder -stäbe oder über Gleitschienen, derart am Aufnahmekörper angebracht sein, dass es im Nichtgebrauchszustand entlang der Wandung des Aufnahmekörpers, vorzugsweise an der Innenseite der Wandung angeordnet ist und durch eine Zug- Klappbewegung ausgeklappt werden kann. Beispielsweise kann am Aufnahmekörper dabei zusätzlich für jedes Stapelelement eine Art Tasche oder ein Einlege- bzw. Einschubabschnitt vorgesehen sein, in die bzw. in den das Stapelelement im Nichtgebrauchszustand schlupfen kann. Vorliegend wird unter beweglich angeordneten Stapelelementen auch verstanden, dass die Stapelelemente abnehmbar an dem Aufnahmekörper befestigt sind. Die Stapelelemente können dabei insbesondere in vorgesehenen Taschen oder Einlege- bzw. Einschubabschnitten des Aufnahmekörpers eingelegt werden, sofern sich der Behälter im Nichtgebrauchszustand befindet.

Gemäß einer bevorzugten Ausführungsform der vorliegenden Erfindung sind an der Oberseite des Aufnahmekörpers zwei leistenförmige Stapelelemente vorgesehen, wobei jedes leistenförmige Stapelelement zwei im Bereich seiner Endbereiche angeordnete Entwässerungsrinnen aufweist. Die leistenförmigen Stapelelemente sind dabei besonders bevorzugt verschwenkbar ausgebildet. In besonders bevorzugten Ausführungsformen können die an der Oberseite vorgesehenen, verschwenkbar ausgebildeten Stapelelemente so dimensioniert sein, dass sie zugleich eine Abdeckung ausbilden. Beispielsweise können dabei entweder zwei Stapelelemente zusammenwirken, um gemeinsam die oberseitige Öffnung des Aufnahmekörpers abzudecken oder ein Stapelelement weist derart an die Geometrie der oberseitigen Öffnung angepasste Maße auf, um eine Abdeckung auszubilden.

Gemäß einer alternativen bevorzugten Ausführungsform sind an der Unterseite des Aufnahmekörpers zumindest zwei, vorzugsweise vier verschiebbar ausgebildete Stapelelemente vorgesehen, wobei beispielsweise jedes Stapelelement jeweils eine Entwässerungsrinne aufweisen kann.

Einen ganz besonderen Vorteil bringt der stapelbare Behälter bei der Verwendung als Lagerbehälter beispielsweise für die Lagerung von Scheitholz oder Brennholz mit sich. Alternativ oder additiv ist der stapelbare Behälter auch als Transportbehälter verwendbar, wobei zum Beispiel zusätzlich Griffelemente oder Tragegriffe vorgesehen sein können oder wobei die Stapelelemente gleichzeitig auch als Greifeinrichtungen dienen können.

Ebenso alternativ oder additiv ist der stapelbare Behälter für die Verwendung als Pflanzbehälter, beispielsweise auch als Anzucht- oder Keimungsbehälter oder als Pflanzkübel vorgesehen. Dazu kann eine vorgegebene Menge einer Pflanzerde oder eines Pflanzgranulats in dem Behälter vorgelegt und schließlich Saatgut, Sämlinge, Stecklinge oder Pflanzen eingebracht bzw. eingepflanzt werden. Insbesondere in Ausführungsformen, bei denen der Aufnahmekörper aus einem transparenten, licht- bzw. UV-durchlässigen Material hergestellt ist und in denen Durchbrechungen als Belichtungsöffnungen sowie Belüftungsöffnungen in der Wandung vorgesehen sind, kann besonders vorteilhaft eine Anzucht bzw. ein Wachstum oder ein Gedeihen von Pflanzen bewirkt werden. Die stapelbaren Behälter können somit auch als stapelbares Blumenbeet oder stapelbares Gemüsebeet verstanden werden.

Gemäß einer bevorzugten Ausführungsvariante ist insbesondere bei der Verwendung des stapelbaren Behälters als Pflanzbehälter im Bereich des Aufnahmekörpers zumindest ein Leuchtmittel oder eine Leuchtmittelanordnung vorgesehen, welche(s) mit einer eigenen Energieversorgung oder mit einer Anschlussvorrichtung zum Anschluss an eine externe Energieversorgung ausgestattet ist. Das zumindest eine Leuchtmittel oder die Leuchtmittelanordnung kann dabei in dem Aufnahmeraum des Aufnahmekörpers oder an einer Oberseite des Aufnahmekörpers angeordnet sein, derart, dass beispielsweise der Aufnahmeraum beleuchtet werden kann.

Das zumindest eine Leuchtmittel oder die Leuchtmittelanordnung ist dabei vorzugsweise zum Emittieren eines Lichts mit einer das Pflanzenwachstum fördernden Wellenlänge ausgebildet, und ist bevorzugt regelbar, und zwar derart, dass das Licht über vorgegebene Zeitspannen und/oder zu vorgegebenen Tageszeiten emittiert wird. Beispielsweise kann das Leuchtmittel oder die Leuchtmittelanordnung so geregelt werden, dass das Licht nach Sonnenuntergang emittiert wird oder, falls eine Verwendung der stapelbaren Behälters als Pflanzbehälter in Räumen ohne Tageslicht vorgesehen ist, auch ganztätig oder periodisch mit vorgegebenen Zeitintervallen. Zur Energieversorgung des Leuchtmittels oder der Leuchtmittelanordnung ist beispielsweise eine Batterie oder ein Akkumulator vorgesehen. Ferner kann zur Energieversorgung ein Solarpaneel in Kombination mit einer geeigneten Speichereinrichtung vorgesehen sein.

Gemäß der Erfindung weisen die Stapelelemente einen mit der Entwässerungsrinne in kommunizierender Verbindung stehenden Durchlass zum gezielten Führen der in der Entwässerungsrinne gesammelten Flüssigkeit von einer ersten Seite der Stapelelemente zu einer gegenüberliegenden zweiten Seite der Stapelelemente auf. Der Durchlass ist bevorzugt in Form einer trichterartigen Bohrung ausgeführt, kann aber auch ein Durchlass mit einem im Wesentlichen polygonartigen Querschnitt sein. Der Durchlass in den Stapelelementen bewirkt beispielsweise ein gezieltes Führen und Leiten der Flüssigkeit aus den Entwässerungsrinnen von einer oberen Seite bzw. oberen Oberfläche der Stapelelemente, nämlich der ersten Seite der Stapelelemente zu einer unteren Seite, nämlich der zweiten Seite. Da in einem Behälterstapel die Entwässerungsrinnen der Stapelelemente mit den Entwässerungsöffnungen desselben oder eines weiteren Behälters zusammenwirken wird eine Leitung von Flüssigkeit von oben nach unten im Wesentlichen über die Stapelelemente vermittelt. Je nach Anordnung des Durchlasses, insbesondere der trichterartigen Bohrung im Stapelelement ist daher ein Weiterleiten bzw. ein Führen der Flüssigkeit von einem Behälter zum nächsten unterhalb angeordneten Behälter möglich, und zwar entweder in der Form, dass die Flüssigkeit in den Aufnahmeraum des unteren Behälters eingeleitet oder an der Außenseite der Wandung des Aufnahmekörpers des unteren Behälters abgeführt bzw. abgeleitet wird. Insbesondere bei Verwendung der Behälter als Pflanzkübel ergeben dadurch sich besondere Vorteile.

Dabei ist es beispielsweise ebenso möglich, in die trichterartige Bohrung einen Schlauch oder ein Rohr bzw. eine Ablaufröhre einzuführen, wobei der Schlauch oder das Rohr vorzugsweise ein sich aufweitendes Ende aufweist, über das der Schlauch oder das Rohr in der trichterartigen Bohrung versenkt hängen bleibt. Mittels eines solchen Schlauches oder Rohres bzw. einer solchen Ablaufröhre kann ein Ablaufsystem gebildet werden um beispielsweise die Flüssigkeit gezielt in weitere Behälter eines Behälterstapels umzuleiten oder aber in anderen Auffangbehältnissen zu sammeln. Beispielsweise eignen sich derartige Auffangbehältnisse insbesondere zum Sammeln von überschüssigem Gießwasser und dienen als Reservoir für Wasser, das auf unterschiedlichste Art entnommen oder gefördert werden kann. Beispielsweise kann dazu eine manuelle Entnahme oder durch Einsatz entsprechender Mittel auch eine mechanische oder elektrische Entnahme erfolgen. Zum Entleeren der Auffangbehältnisse kann an geeigneter Stelle oder an mehreren Stellen ein Ventil oder Hahn angebracht werden.

Vorteilhaft weist der Aufnahmekörper an einer dem Aufnahmeraum zugewandten Innenseite der Wandung zumindest einen mit der wenigstens einen Entwässerungsöffnung in kommunizierender Verbindung stehenden Fluidkanal zur Führung der Flüssigkeit auf, wobei ein erstes Ende des Fluidkanals mit der Entwässerungsöffnung in kommunizierender Verbindung steht und ein zweites Ende des Fluidkanals eine in den Aufnahmeraum ragende Einlassöffnung für den Eintritt der Flüssigkeit aufweist. Ganz besondere Vorteile ergeben sich darüber, dass der Durchlass mit der Einlassöffnung des Fluidkanals eines oder mehrerer Behälter(s) zum innenseitigen Führen und Ableiten der Flüssigkeit zusammen wirkt. Eine kontrollierte und geführte, im Wesentlichen durchgehende Leitung der Flüssigkeit kann darüber sichergestellt werden, wodurch insbesondere bei der Anwendung als Pflanzkübel die Möglichkeit eröffnet wird, überschüssiges Gießwasser oder Regenwasser gezielt aufzufangen und wiederzuverwerten. Auch kann damit eine im Wesentlichen automatische Tropfbewässerung aller Behälter eines Behälterstapels oder auch benachbarter Behälterstapel verwirklicht werden und zwar vorzugsweise unabhängig davon auf welchem Höhenniveau die Behälter angeordnet sind.

Ganz besonders bevorzugt ist in dem Aufnahmeraum ferner wenigstens ein Einlegeboden vorgesehen, wobei der Einlegeboden mittels dafür ausgebildeter, an der Wandung des Aufnahmekörpers vorgesehener Haltestege an einer vorgegebenen Position in dem Aufnahmeraum gehaltert ist. Beispielsweise ist es bei der Verwendung der Behälter als Pflanzkübel auch möglich, einen wasserdurchlässigen Einlegeboden in dem Aufnahmeraum vorzusehen, auf dem die Pflanzerde oder das Pflanzgranulat gelagert ist. Unterhalb des Einlegebodens kann dadurch ein Raum geschaffen werden, in dem beispielsweise durch Verschließen der Entwässerungsöffnungen Gießwasser aufgefangen werden kann.

Die vorliegende Erfindung umfasst auch eine Anordnung aus aufeinandergestapelten Behältern wie oberhalb definiert, wobei zumindest ein erster Behälter unterhalb eines zweiten Behälters angeordnet ist und wobei der zweite Behälter mittels der in einer zweiten Position ausgerichteten Stapelelemente auf dem ersten Behälter aufgelagert ist. Gemäß einer bevorzugten Ausführungsform der Anordnung aus aufeinandergestapelten Behältern sind die Stapelelemente des ersten Behälters an der Oberseite des Aufnahmekörpers angeordnet und die Entwässerungsrinnen der Stapelelemente des ersten Behälters wirken mit den Entwässerungsöffnungen des zweiten Behälters zusammen um Feuchtigkeit und/oder Flüssigkeit aus dem Aufnahmeraum des ersten Behälters abzuleiten. Bevorzugt sind die in der Anordnung aufeinander gestapelten Behälter zur innenseitigen Ableitung der Flüssigkeit aus dem Behälterstapel ausgebildet, wobei zumindest der Aufnahmekörper des ersten Behälters an einer dem Aufnahmeraum zugewandten Innenseite der Wandung wenigstens einen eine Einlassöffnung aufweisenden Fluidkanal zur innenseitigen Führung und Ableitung der Flüssigkeit aufweist, und wobei der Durchlass derart mit der Einlassöffnung des Fluidkanals des ersten Behälters zusammenwirkt, dass die Flüssigkeit über den Durchlass der Stapelelemente in den Fluidkanal des ersten Behälters eingeleitet wird.

Alternativ ist es auch möglich, das Wasser außerhalb der Aufnahmekörper außen, beispielsweise entlang dafür vorgesehener Ablaufnuten oder Ablaufrillen an einer äußeren Oberfläche bzw. Außenseite der Wandung abzuleiten. Je nach Verwendung und Ausgestaltung kann dies für das Gesamtkonzept des Behältersystems vorteilhaft sein. Bevorzugt sind in der Anordnung zumindest zwei Stapel von Behältern nebeneinander angeordnet wobei zusätzlich Verbindungs- und Sicherungselemente vorgesehen sind, um die nebeneinander angeordneten Stapel zu verbinden und gegeneinander zu sichern.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: eine perspektivische Ansicht einer Ausführungsform eines Behälters gemäß der vorliegenden Erfindung;
- Fig. 2: eine perspektivische Ansicht einer alternativen Ausführungsform eines Behälters gemäß der vorliegenden Erfindung;
- Fig. 3a: ausschnittsweise eine schematische Ansicht einer wie in Figur 2 dargestellten Ausführungsform eines Behälters mit einem in einer zweiten Position ausgerichteten Stapelelement;
- Fig. 3b: den Ausschnitt des Behälters der Figur 3a mit dem in einer ersten Position ausgerichteten Stapelelement;
- Fig. 3c: ausschnittsweise eine schematische Ansicht zweier aufeinander gestapelter Behälter;
- Fig. 3d: ausschnittsweise eine schematische Ansicht zweier ineinander gestapelter Behälter;
- Fig. 4a: schematisch dargestellt eine unterseitige Ansicht des Bodens des Aufnahmekörpers gemäß einer bevorzugten Ausführungsform der Erfindung mit an der Unterseite des Aufnahmekörpers angeordneten Stapelelementen in ihrer ersten Position;
- Fig. 4b: schematisch dargestellt die unterseitige Ansicht des Bodens des Aufnahmekörpers der Figur 4a mit den Stapelelementen in ihrer zweiten Position;
- Fig. 5a: ausschnittsweise einen Vertikalschnitt einer bevorzugten Ausführungsform des Aufnahmekörpers im Bereich des Bodens;
- Fig. 5b: ausschnittsweise einen Vertikalschnitt einer weiteren bevorzugten Ausführungsform des Aufnahmekörpers im Bereich des Bodens;
- Fig. 6a: einen Abschnitt eines Stapelelementes in Draufsicht;
- Fig. 6b: den Abschnitt des Stapelelementes der Figur 6a in perspektivischer Ansicht;
- Fig. 7a: eine Anordnung zweier aufeinander gestapelter Behälter;
- Fig. 7b: eine weitere Anordnung zweier alternativer aufeinander gestapelter Behälter.
- Fig. 8a: einen Abschnitt einer weiteren Ausführungsform eines Stapelelementes in Draufsicht;
- Fig. 8b: den Abschnitt des Stapelelementes der Figur 8a in perspektivischer Ansicht;
- Fig. 8c: einen Abschnitt einer alternativen Ausführungsform eines Stapelelementes in Draufsicht;
- Fig. 9a: in innenseitiger Ansicht den Eckbereich einer Ausführungsform des Behälters und
- Fig. 9b: in innenseitiger Ansicht den Eckbereich einer weiteren Ausführungsform des Behälters.

### Wege zur Ausführung der Erfindung

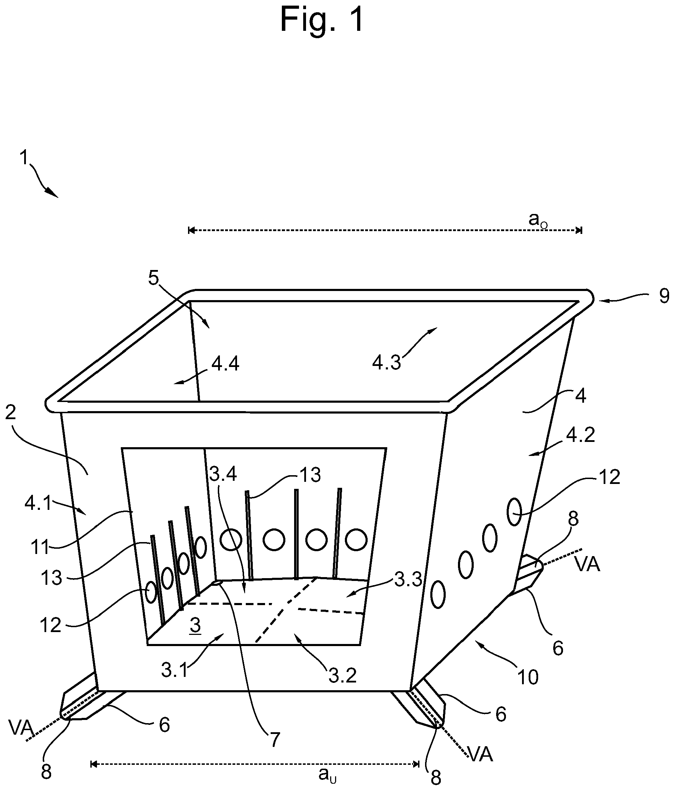

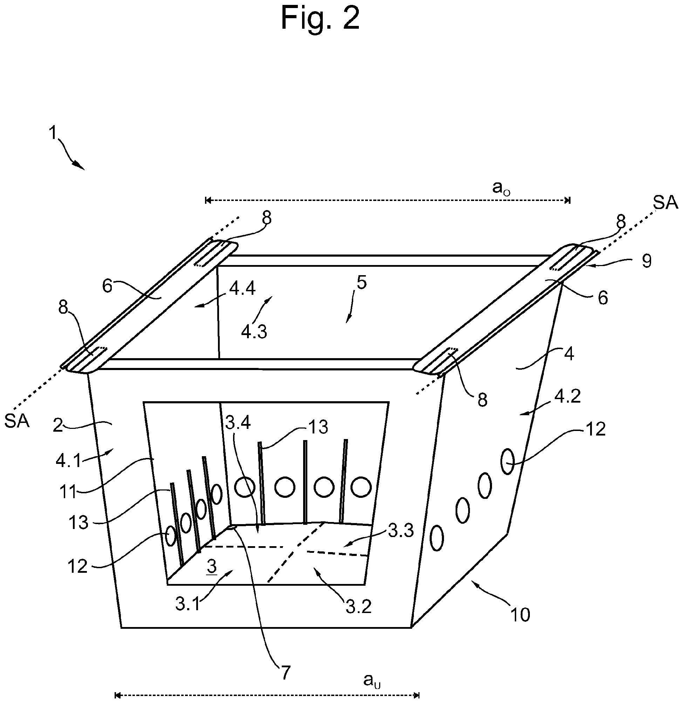

Die Figuren 1 und 2 zeigen in einer schematischen Darstellung jeweils eine perspektivische Ansicht einer Ausführungsform eines stapelbaren Behälters 1 gemäß der vorliegenden Erfindung. Der stapelbare Behälter 1 umfasst einen Aufnahmekörper 2 mit einem Boden 3 und mit einem von einer seitlichen Wandung 4 begrenzten Aufnahmeraum 5 für das aufzunehmende Gut, insbesondere das zu transportierende und/oder zu lagernde Transport- und Lagergut. Der im Wesentlichen durchgehend ausgeführte Boden 3 bildet eine Unterseite 10 des Aufnahmekörpers 2. Eine der Unterseite 10 gegenüberliegende Oberseite 9 des Aufnahmekörpers 2 ist offen ausgebildet. Der stapelbare Behälter 1 der dargestellten Beispiele stellt somit einen nicht abgedeckten, oben offenen Transport- und Lagerbehälter 1 dar.

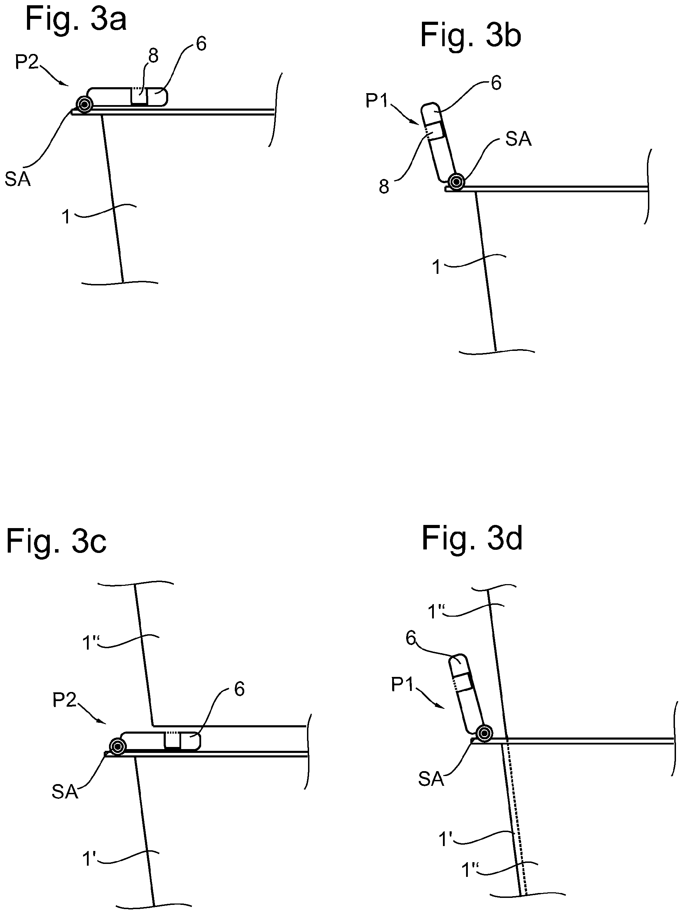

Um das Stapeln gleichartiger stapelbarer Behälter 1 zu ermöglichen, weist der Aufnahmekörper 2 beweglich angeordnete Stapelelemente 6 auf, welche von einer in den Figuren 1 und 2 nicht dargestellten ersten Position P1 in eine wie in den Figuren 1 und 2 gezeigte, zweite Position P2 bewegt werden können, in der sie ein Aufeinanderstapeln gleichartiger Behälter 1 erlauben. In der ersten Position P1 (siehe z.B. Figuren 3b und 3d) der Stapelelemente 6 ist dagegen ein Ineinanderstapeln gleichartiger Behälter 1 möglich.

Der in Figur 1 dargestellte Aufnahmekörper 2 weist an seiner Unterseite 10 vier Stapelelemente 6 auf, die entlang einer jeweiligen Verschiebeachse VA verschiebbar angeordnet sind, wohingegen der in Figur 2 dargestellte Aufnahmekörper 2 an seiner Oberseite 9 zwei leistenförmige Stapelelemente 6 aufweist, die um eine Schwenkachse SA verschwenkbar angeordnet sind.

Der Aufnahmekörper 2 der dargestellten Beispiele weist im Wesentlichen die Form eines Pyramidenstumpfes mit einer quadratischen Grundfläche auf, wobei die größere Grundfläche des Pyramidenstumpfes durch eine gedachte oberseitige Fläche an der Oberseite 10 definiert ist und wobei der Boden 3 des Aufnahmekörpers 2 die kleinere Deckfläche des Pyramidenstumpfes bildet. In den dargestellten Beispielen beträgt eine untere Kantenlänge a_{U} des Aufnahmekörpers 2 rund 33 cm und eine obere Kantenlänge a_{O} des Aufnahmekörpers 2 rund 40 cm. Aufgrund der pyramidenstumpfförmigen Ausführung des Aufnahmekörpers 2 können gleichartige Behälter 1 auf besonders einfache Weise ineinander gestapelt werden, sofern die Stapelelemente 6 in der dafür vorgesehenen ersten Position P1 ausgerichtet sind.

Die Wandung 4 des Aufnahmekörpers 2 umfasst beispielsweise vier rechtwinkelig aneinander anschließende Wandungsabschnitte 4.1, 4.2, 4.3, 4.4, wobei ein die Vorderseite des Aufnahmekörpers 2 definierender erster Wandungsabschnitt 4.1 eine Durchbrechung 11 aufweist. In einem die Seiten des Aufnahmekörpers 2 bildenden zweiten und vierten Wandungsabschnitt 4.2, 4.4 sowie in einem die Rückseite bildenden dritten Wandungsabschnitt 4.3 sind Belüftungsöffnungen 12 für eine verbesserte Luftzirkulation in dem Aufnahmeraum 5 ausgebildet. Ferner weisen die Wandungsabschnitte 4.2, 4.3, 4.4 an ihrer dem Aufnahmeraum 5 zugewandten Seite jeweils mehrere Abstandshalter 13 in Form von Stegen auf.

Im Bereich des Bodens 3 weist der Aufnahmekörper 2 vier Entwässerungsöffnungen 7 auf, von denen jede in jeweils einer der vier Ecken des Bodens 3 und dort jeweils in einem Anschlussbereich der Wandung 4 an den Boden 3 ausgebildet ist. Der Boden 3 umfasst vier aneinander anschließende, geneigte Bodenabschnitte 3.1, 3.2, 3.3, 3.4, wobei die geneigten Bodenabschnitte 3.1, 3.2, 3.3, 3.4 derart zueinander angeordnet sind, dass der Boden 3 in einem Bereich um den Mittelpunkt herum ein höheres Niveau aufweist und an jeder der vier Ecken ein tieferes Niveau aufweist. Jeder der Bodenabschnitte 3.1, 3.2, 3.3, 3.4 fällt jeweils mit einem vorgegebenen Neigungswinkel von dem höheren Niveau in der Mitte in Richtung einer Ecke zu dem tieferen Niveau hin ab. Eine in dem Aufnahmeraum 5 vorhandenen Feuchtigkeit oder Flüssigkeit wird somit aufgrund der Ausgestaltung des Bodens 3 in Richtung der Entwässerungsöffnungen 7 geleitet.

Die Stapelelemente 6 sind erfindungsgemäß mit Entwässerungsrinnen 8 ausgestattet, wobei die Entwässerungsrinnen 8 und die Entwässerungsöffnungen 7 des Aufnahmekörpers 2 so zueinander angeordnet sind, dass die aus den Entwässerungsöffnungen 7 austretende Feuchtigkeit oder Flüssigkeit unmittelbar in die Entwässerungsrinnen 8 gelangt. Die Entwässerungsrinnen 8 wirken daher mit den Entwässerungsöffnungen 7 des Aufnahmekörpers 2 derart zusammen, dass die aus den Entwässerungsöffnungen 7 austretende Feuchtigkeit oder Flüssigkeit über die Entwässerungsrinnen 8 abgeleitet werden kann.

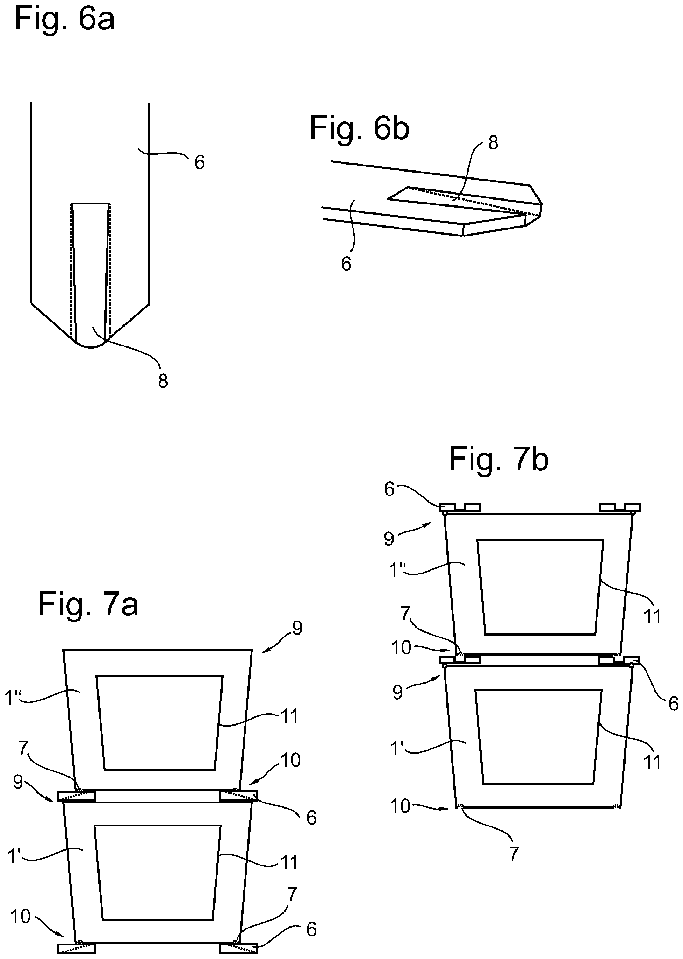

Im Beispiel der Figur 2 erfolgt das oben beschriebene, durch die Entwässerungsrinnen vermittelte Ableiten der Feuchtigkeit oder Flüssigkeit jedoch lediglich in einem Stapel von zumindest zwei aufeinander gestapelten Behältern 1, wie in der Figur 7b dargestellt.

Der vorliegende Behälter 1 eignet sich besonders vorteilhaft für die Lagerung und den Transport von Brennholz, insbesondere von Brennholzscheiten bzw. Scheitholz, welches zum Lagern und Trocknen in den Aufnahmeraum 5 der Transport- und Lagerbehälter 1 eingebracht und wie in einer herkömmlichen Holzlege scheitweise aufgeschichtet werden kann. Das Einbringen des Scheitholzes kann dabei entweder über die oberseitige Öffnung an der Oberseite 9 des Aufnahmekörpers 2 erfolgen oder auch durch die im ersten Wandungsabschnitt 4.1 ausgebildete Durchbrechung 11. Die Dimensionierung des Aufnahmekörpers 2 mit seiner oberen und unteren Kantenlänge a_{O}, a_{U} von rund 40 cm bzw. rund 33 cm ist auf geschnittenes Scheitholz mit einer Scheitlänge von rund 25 bis 33 cm angepasst.

Durch die Abstandshalter 13 an den dem Aufnahmeraum 5 zugewandten Seiten der Wandungsabschnitte 4.2, 4.3, 4.4 wird das Scheitholz daran gehindert, großflächig an der Wandung 4 anzuliegen. Durch die oben offene Ausgestaltung der Transport- und Lagerbehälter 1 in Kombination mit den Belüftungsöffnungen 12 in den Wandungsabschnitten 4.2, 4.3, 4.4 sowie der Durchbrechung 11 in der Vorderseite wird eine effektive Durchlüftung und Luftzirkulation im Aufnahmeraum 5 gewährleistet, wodurch einer Schimmelbildung und Fäulnis entgegengewirkt und die Trocknung des Holzes positiv beeinflusst wird.

Aufgrund der beschriebenen Entwässerung über die zusammenwirkenden Entwässerungsrinnen 8 und Entwässerungsöffnungen 7 kann beispielsweise sich niederschlagendes Tauwasser oder gegebenenfalls auch eindringendes Niederschlagswasser problemlos abgeleitet werden. Durch den im Wesentlichen geschlossen ausgebildeten Boden kann der Behälter 1 gleichzeitig für einen schmutzfreien Transport des Brennholzes in den Wohnraum sowie für eine saubere Aufbewahrung am Ofen bis zum endgültigen Verbrauch genutzt werden.

Der vorliegende Behälter 1 eignet sich insbesondere vorteilhaft auch für die Verwendung als Pflanzbehälter, beispielsweise zur Auskeimung oder Anzucht von Sämlingen oder Stecklingen oder auch als Pflanzkübel für Grünpflanzen oder Blumen. Aufgrund der beschriebenen Entwässerung über die zusammenwirkenden Entwässerungsrinnen 8 und Entwässerungsöffnungen 7 kann der Bildung von Staunässe effektiv entgegengewirkt werden. Insbesondere durch Verwendung eines transparenten Materials zur Herstellung der Behälter 1 in Kombination mit den in der Wandung 4 vorgesehenen Durchbrechungen 11 und Belüftungsöffnungen 12 ist ein ausreichender Lichteinfall in den Aufnahmeraum 2 sowie eine ausreichende Durchlüftung des Aufnahmeraumes 2 gewährleistet. Der vorliegende Behälter 1 kann daher auch als stapelbares Gemüse- oder Blumenbeet verstanden werden. Ebenso kann ein Stapel der vorliegenden Behälter 1 beispielsweise ein begrüntes Trennelement oder eine begrünte Trennwand bilden, indem bei aufeinander gestapelten, bepflanzten Behältern 1 die Blatt- und Blütenanteile der Pflanzen durch die Durchbrechungen 11 hindurch nach außen geführt sind und an der Außenseite der Aufnahmekörper 2 herabhängen oder ranken.

In den Figuren 3a und 3b ist in einer schematischen Ansicht von hinten jeweils ein oberseitiger Ausschnitt einer der Figur 2 entsprechenden Ausführungsform des Behälters 1 dargestellt. Das verschwenkbare, leistenförmige Stapelelement 6 kann von der in Figur 3b gezeigten ersten Position P1 um die Schwenkachse SA in die in Figur 3a gezeigte zweite Position P2 verschwenkt werden. In der ersten Position P1 des Stapelelementes 6 ist das Ineinanderstapeln gleichartiger Behälter 1 möglich. Die Figur 3d veranschaulicht zwei ineinander gestapelte Behälter 1, wobei ein zweiter Behälter 1" in einem unterhalb angeordneten ersten Behälter 1' aufgenommen ist. In ihrer zweiten Position P2 erlauben die Stapelelemente 6 das Aufeinanderstapeln gleichartiger Behälter 1. Der Figur 3c ist zu entnehmen, dass das Stapelelement 6 eines ersten Behälters 1' ein Auflager für den Boden 3 eines auf dem ersten Behälter 1' angeordneten zweiten Behälters 1" bildet, wie auch aus der Figur 7b hervorgeht.

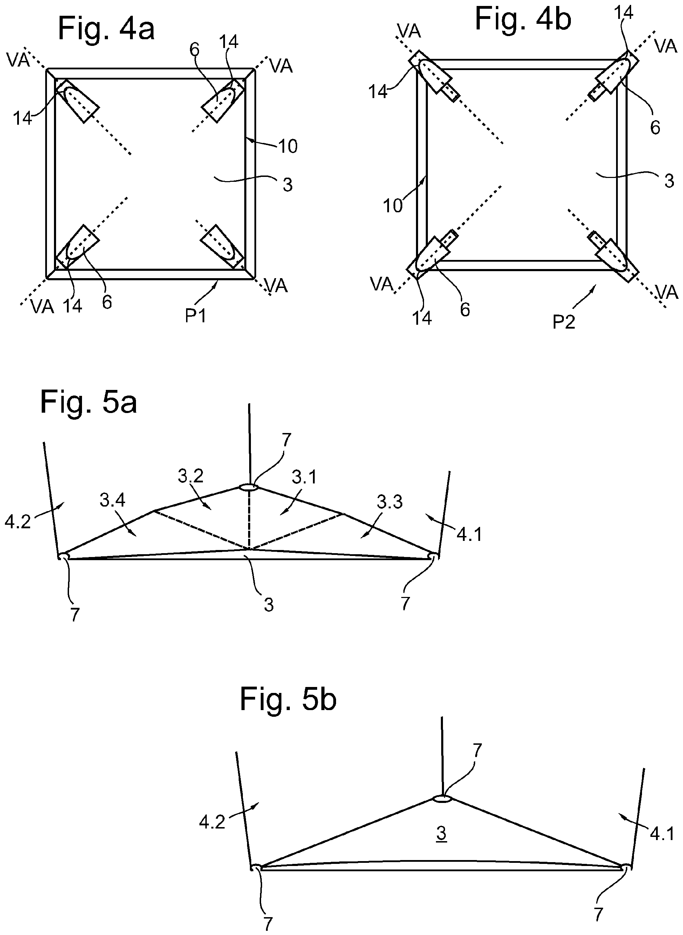

Die Figuren 4a und 4b zeigen schematisch dargestellt eine unterseitige Ansicht des Aufnahmekörpers 2 einer der Figur 1 entsprechenden Ausführungsform des Transport- und Lagerbehälters 1. Die verschiebbaren Stapelelemente 6 können von der in der Figur 4a gezeigten ersten Position P1 durch Verschieben entlang einer jeweiligen Verschiebeachse VA in die in Figur 4b gezeigte zweite Position P2 bewegt werden. Beispielsweise sind die Stapelelemente 6 in jeder der zwei Positionen P1 und P2 durch Verrastung mittels eines Rasthakens feststellbar.

Wie auch aus der Figur 7a hervorgeht, bilden die Stapelelemente 6 in ihrer zweiten Position P2 Standfüße, die dazu ausgebildet sind, sich gegen einen oberen Rand eines unterhalb angeordneten Behälters 1 abzustützen. Um einen besonders sicheren Stand auf einem unterhalb angeordneten Behälter 1 sicherzustellen, weisen die Stapelelemente 6 des dargestellten Beispiels an ihrer jeweiligen Unterseite eine Schulter 14 auf, die als Anlagefläche für den oberen Rand eines unterhalb angeordneten Behälters 1 dient und ein Verrutschen verhindert.

Die Figuren 5a und 5b zeigen ausschnittsweise und schematisch dargestellt einen Vertikalschnitt einer jeweils bevorzugten Ausführungsform des Aufnahmekörpers 2 im Bereich des Bodens 3. Der Boden der Figur 5a weist eine Vielzahl von geneigten Bodenabschnitten 3.1, 3.2, 3.3, 3.4 auf, die derart zueinander angeordnet sind, dass ausgehend von der Mitte der Bodenfläche ein Gefälle in Richtung der Wandung 4 ausgebildet wird, wobei die geneigten Bodenabschnitte 3.1, 3.2, 3.3, 3.4 entlang gedachter, sternförmig angeordneter Linien aneinander anschließen. Die Entwässerungsöffnungen 7 sind an den vier Ecken des quadratisch ausgebildeten Bodens 3 angeordnet, wobei die vier Ecken einen tieferen Niveaupunkt bilden und wobei auch die jeweiligen Wandungsabschnitte 4. 1, 4.2, 4.3, 4.4 der Wandung 4 im Bereich der Ecken aneinander anschließen. Die geneigten Bodenabschnitte 3.1, 3.2, 3.3, 3.4 sind derart zueinander angeordnet bzw. gegeneinander geneigt, dass auf den Boden 3 auftreffende Feuchtigkeit oder Flüssigkeit in Richtung der Entwässerungsöffnungen 7 fließt. Im Gegensatz zu dem Beispiel der Figur 5a ist der Boden gemäß Figur 5b gewölbt ausgebildet.

Die Figuren 6a und 6b veranschaulichen die in den Stapelelementen 6 ausgebildeten Entwässerungsrinnen 8, welche ein Gefälle in Richtung des freien Endes des Stapelelementes 6 aufweisen, um ein möglichst effektives Ableiten bzw. einen möglichst effektiven Abfluss des Wassers zu sicherzustellen.

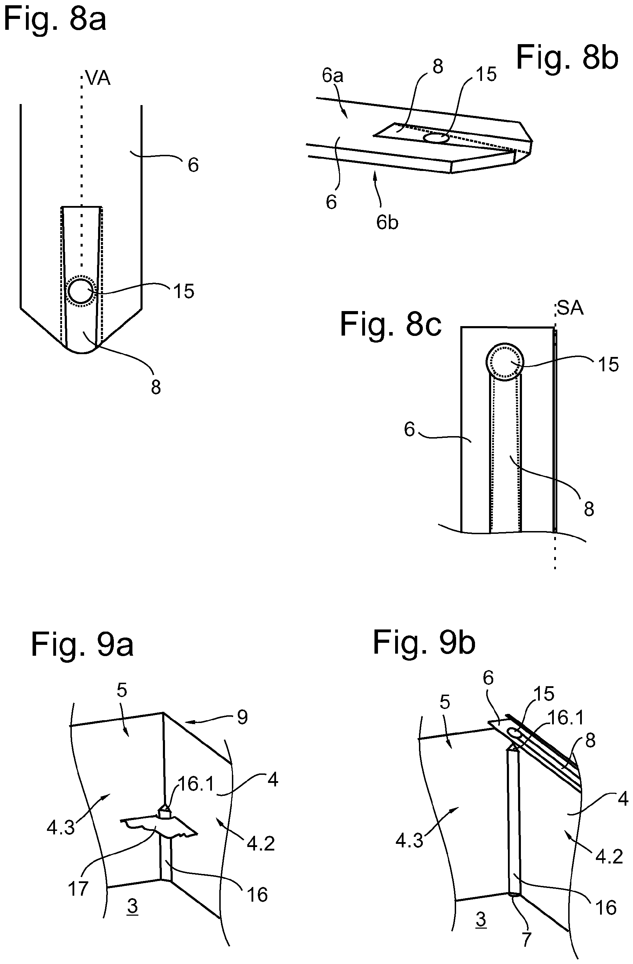

In den Figuren 8a bis 8c sind Ausführungsformen von Stapelelementen 6 dargestellt, die zusätzlich zur Entwässerungsrinne 8 einen mit dieser in kommunizierender Verbindung stehenden Durchlass 15 in Form einer trichterartigen Bohrung aufweisen. Die trichterartige Bohrung 15 ist dazu ausgebildet, sich in der Entwässerungsrinne 8 sammelnde Flüssigkeit von einer die Oberseite der Stapelelemente 6 bildenden ersten Seite 6a zu einer gegenüberliegenden, die Unterseite der Stapelelemente 6 bildenden zweite Seite 6b zu leiten. Das Stapelelement 6 der Figuren 8a und 8b ist ein Beispiel für ein entlang der Verschiebeachse VA verschiebbares Stapelelement 6, das vorzugsweise an der Unterseite eines Behälters angebracht ist und das Stapelelement 6 der Figur 8c ist ein Beispiel für ein um die Schwenkachse SA verschwenkbares leistenförmiges Stapelelement 6, das vorzugsweise an der Oberseite eines Behälters angebracht ist.

Die Figuren 9a und 9b zeigen in einer innenseitigen Ansicht eines Eckbereiches der Aufnahmebehälter 2 jeweils eine bevorzugte Ausführungsform der Behälter 1 mit einem an der dem Aufnahmeraum 5 zugewandten Innenseite der Wandung 4 angeordneten Fluidkanal 16 zur gezielten Führung und Leitung von Flüssigkeit. Der Fluidkanal 16 steht mit einem ersten Ende mit der Entwässerungsöffnung 7 in kommunizierender Verbindung und weist an einem zweiten Ende eine in den Aufnahmeraum 5 ragende Einlassöffnung 16.1 für den Eintritt von Flüssigkeit auf.

Im Beispiel der Figur 9a ist zusätzlich ein Einlegeboden 17 vorgesehen, von dem lediglich ein Teilstück dargestellt ist. Der Einlegeboden 17 ist beispielsweise wasser- bzw. flüssigkeitsdurchlässig und ist mittels dafür ausgebildeter, an der Wandung 4 des Aufnahmekörpers 2 vorgesehener Haltestege an einer vorgegebenen Position in dem Aufnahmeraum 5 gehaltert, wobei der Einlegeboden 17 eine im Wesentlichen parallel zum Boden 3 und beabstandet zu diesem verlaufende Einlegeebene bildet. Der Fluidkanal 16 deckt mit seinem einen Ende die (in Figur 9a nicht sichtbare) Entwässerungsöffnung 7 im Bereich des Bodens 3 vollständig ab und erstreckt sich vom Boden 3 in Richtung zur Oberseite 9 des Aufnahmekörpers 2, und zwar derart, dass der Fluidkanal 16 nach oben hin über die Einlegeebene hinausragt und die Einlassöffnung 16.1 des Fluidkanals 16 oberhalb des Einlegebodens 17 angeordnet ist. Bei dieser beispielhaften Ausführungsform kann sich beispielsweise Wasser bis zur Höhe der Einlassöffnung 16.1 des Fluidkanals 16 und damit im Wesentlichen bis knapp oberhalb des Einlegebodens 17 sammeln. Sobald der Flüssigkeitspegel die Höhe der Einlassöffnung 16.1 erreicht, läuft das Wasser bzw. die Flüssigkeit über die Einlassöffnung 16.1 in den Fluidkanal 16 und von dort durch die Entwässerungsöffnung 7 aus dem Aufnahmekörper 2. Der Fluidkanal 16 kann in diesen Ausführungsformen quasi als Überlauftunnel verstanden werden. Vorzugsweise ist in jeder Ecke eines Behälters 1 mit im wesentlichen rechteckiger Grundform ein Fluidkanal 16 angeordnet.

Bei dem in Figur 9b dargestellten Beispiel wird das Zusammenwirken des Durchlasses 15 im Stapelelement 6 mit dem Fluidkanal 16 des Behälters 1 zum innenseitigen Führen und Ableiten der Flüssigkeit veranschaulicht. Flüssigkeit, die sich in der Entwässerungsrinne 8 des Stapelelementes 6 sammelt, kann über den Durchlass 15 in den Aufnahmeraum 5 des Aufnahmekörpers 2 eingeführt werden, wobei der Durchlass 15 vorzugsweise so angeordnet ist, dass die Flüssigkeit entlang der dem Aufnahmeraum 5 zugewandten Innenseite der Wandung 4 in dem Eckbereich, in dem die Wandungsabschnitte 4.2, 4.3 aneinander anschließen, in den Aufnahmeraum 5 eindringt bzw. eingeleitet wird und schließlich über die Einlassöffnung 16.1 in den Fluidkanal 16 eindringt. Von dort wird die Flüssigkeit in Richtung der Entwässerungsöffnung 7 im Bereich des Bodens 3 geführt und verlässt durch diese den Aufnahmekörper 2. Sofern der Behälter1 in einem Behälterstapel auf einem unterhalb angeordneten Behälter aufgestapelt ist, setzt sich der Weg der Flüssigkeit analog fort, indem die Flüssigkeit nach Austritt aus der Entwässerungsöffnung 7 des Behälters über die Entwässerungsrinne 8 eines unterhalb angeordneten Behälters 1 aufgenommen und von dort weiter in dessen Aufnahmeraum 5 eingeleitet wird. In dieser Weise kann zum Beispiel über den gesamten Behälterstapel, nämlich vom obersten bis zum untersten Behälter 1 eines Behälterstapels eine durchgehende Flüssigkeitsleitung bzw. ein Fließkanal von oben nach unten bewirkt werden, wobei die Flüssigkeit im Wesentlichen innerhalb der Aufnahmekörper geführt wird, so dass Verschmutzungen im Außenbereich der Wandung 4 der Behälter 1 wirksam vermieden werden können.

### Bezugszeichenliste

- 1: Behälter
- 1', 1": erster bzw. zweiter Behälter
- 2: Aufnahmekörper
- 3: Boden
- 3.1: Bodenabschnitt
- 3.2: Bodenabschnitt
- 3.3: Bodenabschnitt
- 3.4: Bodenabschnitt
- 4: Wandung
- 4.1: Wandungsabschnitt
- 4.2: Wandungsabschnitt
- 4.3: Wandungsabschnitt
- 4.4: Wandungsabschnitt
- 5: Aufnahmeraum
- 6: Stapelelement
- 6a: erste Seite des Stapelelementes
- 6b: zweite Seite des Stapelelementes
- 7: Entwässerungsöffnung
- 8: Entwässerungsrinne
- 9: Oberseite
- 10: Unterseite
- 11: Durchbrechung
- 12: Belüftungsöffnung
- 13: Abstandshalter
- 14: Schulter
- 15: Durchlass
- 16: Fluidkanal
- 16.1: Einlassöffnung
- 17: Einlegeboden
- a_{O}: obere Kantenlänge
- a_{U}: untere Kantenlänge
- P1: erste Position
- P2: zweite Position
- SA: Schwenkachse
- VA: Verschiebeachse

## Patentansprüche

1. Stapelbarer Behälter (1) umfassend einen Aufnahmekörper (2) aufweisend zumindest einen Boden (3) und einen vom Boden (3) und einer seitlichen Wandung (4) begrenzten Aufnahmeraum (5), bei dem der Aufnahmekörper (2) beweglich angeordnete Stapelelemente (6) aufweist und die Stapelelemente (6) wenigstens von einer ersten Position (P1) in eine zweite Position (P2) bewegbar sind, wobei die Stapelelemente (6) in der ersten Position (P1) ein Ineinanderstapeln und in der zweiten Position (P2) das Aufeinanderstapeln zumindest zweier derartiger stapelbarer Behälter (1) erlauben, wobei der Aufnahmekörper (2) im Bereich des Bodens (3) wenigstens eine Entwässerungsöffnung (7) aufweist, wobei der Boden (3) des Aufnahmekörpers (2) zur Aufnahme der in dem Aufnahmeraum (5) vorhandenen Feuchtigkeit und/oder Flüssigkeit und zur Führung der aufgenommenen Feuchtigkeit und/oder Flüssigkeit in Richtung der wenigstens einen Entwässerungsöffnung (7) ausgebildet ist, wobei zumindest eines der Stapelelemente (6) eine Entwässerungsrinne (8) aufweist, die zur Aufnahme und zum Ableiten von Feuchtigkeit und/oder Flüssigkeit ausgebildet ist, **dadurch gekennzeichnet, dass** die Stapelelemente (6) ferner einen mit der Entwässerungsrinne (8) in kommunizierender Verbindung stehenden Durchlass (15) zum gezielten Führen der in der Entwässerungsrinne (8) gesammelten Flüssigkeit von einer ersten Seite (6a) der Stapelelemente (6) zu einer gegenüberliegenden zweiten Seite (6b) der Stapelelemente (6) aufweisen.

2. Stapelbarer Behälter (1) nach Anspruch 1, **dadurch gekennzeichnet, dass** die wenigstens eine Entwässerungsöffnung (7) mit der wenigstens einen Entwässerungsrinne (8) eines oder mehrerer Behälter(s) (1) zum Ableiten der in dem Aufnahmeraum (5) vorhandenen Feuchtigkeit und/oder Flüssigkeit zusammenwirkt.

3. Stapelbarer Behälter (1) nach Anspruch 1 oder 2, **dadurch gekennzeichnet, dass** der Aufnahmekörper (2) mehrere Entwässerungsöffnungen (7) aufweist, die benachbart zu der Wandung (4) im Boden (3) und/oder in einem Anschlussbereich der Wandung (4) an den Boden (3) angeordnet sind, und/oder dass der Boden (3) geneigt oder gewölbt ausgebildet ist.

4. Stapelbarer Behälter (1) nach Anspruch 3, **dadurch gekennzeichnet, dass** der Boden (3) wenigstens zwei aneinander anschließende, geneigte Bodenabschnitte (3.1, 3.2) umfasst, wobei die Bodenabschnitte (3.1, 3.2) an einem höheren Niveaupunkt aneinander anschließen und jeweils mit einem vorgegebenen Neigungswinkel in Richtung der Wandung (4) zu einem tieferen Niveaupunkt hin abfallen.

5. Stapelbarer Behälter (1) nach einem der vorhergehenden Ansprüche, **dadurch gekennzeichnet, dass** der Aufnahmekörper (2) im Wesentlichen in Form eines Pyramidenstumpfes mit einer polygonalen, insbesondere rechteckigen, vorzugsweise quadratischen Grundfläche ausgebildet ist und aneinander anschließende seitliche Wandungsabschnitte (4.1, 4.2, 4.3, 4.4) umfasst oder dass der Aufnahmekörper (2) im Wesentlichen in Form eines Kegelstumpfes mit einer runden oder ovalen Grundfläche ausgebildet ist, wobei in der Wandung (4) des Aufnahmekörpers (2) wenigstens eine Durchbrechung (11) ausgebildet ist.

6. Stapelbarer Behälter (1) nach einem der vorhergehenden Ansprüche, **dadurch gekennzeichnet, dass** in der Wandung (4) Belüftungsöffnungen (12) ausgebildet sind und/oder dass die Wandung (4) an einer dem Aufnahmeraum (5) zugewandten Seite Abstandshalter (13) aufweist und/oder dass die Stapelelemente (6) verschiebbar oder um eine Schwenkachse (SA) verschwenkbar ausgebildet sind.

7. Stapelbarer Behälter (1) nach einem der vorhergehenden Ansprüche, **dadurch gekennzeichnet, dass** die Stapelelemente (6) an einer Oberseite (9) und/oder an einer Unterseite (10) des Aufnahmekörpers (2) angeordnet sind.

8. Stapelbarer Behälter (1) nach Anspruch 7, **dadurch gekennzeichnet, dass** an der Oberseite (9) des Aufnahmekörpers (2) zwei leistenförmige Stapelelemente (6) vorgesehen sind, wobei jedes leistenförmige Stapelelement (6) zumindest zwei im Bereich seiner Endbereiche angeordnete Entwässerungsrinnen (8) aufweist oder dass an der Unterseite (10) des Aufnahmekörpers (2) vier verschiebbar ausgebildete Stapelelemente (6) angeordnet sind, wobei jedes Stapelelement (6) jeweils zumindest eine Entwässerungsrinne (8) aufweist.

9. Stapelbarer Behälter (1) nach einem der vorhergehenden Ansprüche, **dadurch gekennzeichnet, dass** der Behälter für die Verwendung als Lagerbehälter und/oder als Transportbehälter und/oder als Pflanzbehälter eingerichtet ist.

10. Stapelbarer Behälter (1) nach einem der vorhergehenden Ansprüche, **dadurch gekennzeichnet, dass** der Aufnahmekörper (2) an einer dem Aufnahmeraum (5) zugewandten Innenseite der Wandung (4) zumindest einen mit der wenigstens einen Entwässerungsöffnung (7) in kommunizierender Verbindung stehenden Fluidkanal (16) zur Führung der Flüssigkeit aufweist, wobei ein erstes Ende des Fluidkanals (16) mit der Entwässerungsöffnung (7) in kommunizierender Verbindung steht und ein zweites Ende des Fluidkanals (16) eine Einlassöffnung (16.1) für den Eintritt der Flüssigkeit aufweist und/oder dass der Durchlass (15) mit der Einlassöffnung (16.1) des Fluidkanals (16) eines oder mehrerer Behälter(s) zum innenseitigen Führen und Ableiten der Flüssigkeit zusammenwirkt.

11. Stapelbarer Behälter (1) nach einem der vorhergehenden Ansprüche, **dadurch gekennzeichnet, dass** in dem Aufnahmeraum (5) ferner wenigstens ein Einlegeboden vorgesehen ist, wobei der Einlegeboden mittels dafür ausgebildeter, an der Wandung (4) des Aufnahmekörpers (2) vorgesehener Haltestege an einer vorgegebenen Position in dem Aufnahmeraum (5) gehaltert ist.

12. Anordnung umfassend zumindest zwei in einem Behälterstapel aufeinander gestapelte Behälter (1) gemäß einem der Ansprüche 1 bis 11, **dadurch gekennzeichnet, dass** zumindest ein erster Behälter (1') unterhalb eines zweiten Behälters (1") angeordnet ist und dass der zweite Behälter (1") mittels der in einer zweiten Position (P2) ausgerichteten Stapelelemente (6) auf dem ersten Behälter (1') aufgelagert ist.

13. Anordnung nach Anspruch 12, **dadurch gekennzeichnet, dass** die Stapelelemente (6) des ersten Behälters (1') an der Oberseite (9) des Aufnahmekörpers (2) angeordnet sind und die Entwässerungsrinnen (8) der Stapelelemente (6) des ersten Behälters (1') mit den Entwässerungsöffnungen (7) des zweiten Behälters (1") zusammenwirken, um die Feuchtigkeit und/oder Flüssigkeit aus dem Aufnahmeraum (5) des zweiten Behälters (1") abzuleiten.

14. Anordnung nach Anspruch 12 oder 13, **dadurch gekennzeichnet, dass** die in der Anordnung aufeinander gestapelten Behälter (1', 1") zur innenseitigen Ableitung der Flüssigkeit aus dem Behälterstapel ausgebildet sind, wobei zumindest der Aufnahmekörper (2) des ersten Behälters (1') an einer dem Aufnahmeraum (5) zugewandten Innenseite der Wandung (4) wenigstens einen eine Einlassöffnung (16.1) aufweisenden Fluidkanal (16) zur innenseitigen Führung und Ableitung der Flüssigkeit aufweist, und wobei der Durchlass (15) derart mit der Einlassöffnung (16.1) des Fluidkanals (16) des ersten Behälters (1') zusammenwirkt, dass die Flüssigkeit über den Durchlass (15) der Stapelelemente (6) in den Fluidkanal (16) des ersten Behälters (1') eingeleitet wird.

15. Anordnung nach einem der Ansprüche 12 bis 14, wobei zumindest zwei Behälterstapel aus aufeinander gestapelten Behältern (1) nebeneinander angeordnet sind und wobei Verbindungs- und Sicherungselemente vorgesehen sind, um die nebeneinander angeordneten Behälterstapel zu verbinden und gegeneinander zu sichern.

## Claims

1. A stackable container (1) comprising a receiving body (2) having at least one bottom (3) and a receiving space (5) defined by the bottom (3) and a lateral wall (4), wherein the receiving body (2) comprises movably arranged stacking elements (6), and wherein the stacking elements (6) are at least be movable from a first position (P1) into a second position (P2), wherein the stacking elements (6) allow stacking of at least two stackable containers (1) of this type one inside the other in the first position (P1) and one on top of the other in the second position (P2), wherein the receiving body (2) comprises at least one drainage opening (7) in the region of the bottom (3), wherein the bottom (3) of the receiving body (2) is configured to receive the moisture and/or liquid present in the receiving space (5), and to guide the received moisture and/or liquid in the direction of the at least one drainage opening (7), wherein at least one of the stacking elements (6) comprises a drainage channel (8), which is configured to receive and to drain moisture and/or liquid, **characterized in that** the stacking elements (6) further comprise a passage opening (15) communicatively connected to the drainage channel (8) for the targeted guidance of the liquid collected in the drainage channel (8) from a first side (6a) of the stacking elements (6) to an opposite second side (6b) of the stacking elements (6).

2. Stackable container (1) according to claim 1, **characterized in that** the at least one drainage opening (7) cooperates with the at least one drainage channel (8) of one or several container(s) (1) to drain the moisture and/or liquid present in the receiving space (5).

3. Stackable container (1) according to claim 1 or 2, **characterized in that** the receiving body (2) comprises several drainage openings (7), which are arranged adjacent to the wall (4) in the bottom (3) and/or in a connecting region of the wall (4) to the bottom (3), and/or that the bottom (3) is formed to be inclined or curved.

4. Stackable container (1) according to claim 3, **characterized in that** the bottom (3) comprises at least two adjoining, inclined bottom sections (3.1, 3.2), wherein the bottom sections (3.1, 3.2) adjoin one another at a higher level point and in each case slope to a deeper level point at a predetermined angle of inclination in the direction of the wall (4).

5. Stackable container (1) according to one of the preceding claims, **characterized in that** the receiving body (2) is formed essentially in the shape of a truncated pyramid with a polygonal, in particular rectangular, preferably square base area, and comprises adjoining lateral wall sections (4.1, 4.2, 4.3, 4.4), or that the receiving body (2) is essentially formed in the shape of a truncated cone with a round or oval base area, wherein at least one through hole (11) is formed in the wall (4) of the receiving body (2).

6. Stackable container (1) according to one of the preceding claims, **characterized in that** ventilation openings (12) are formed in the wall (4) and/or that the wall (4) has spacers (13) on a side facing the receiving space (5) and/or that the stacking elements (6) are formed so as to be slidable or are formed so as to be pivotable about a pivot axis (SA).

7. Stackable container (1) according to one of the preceding claims, **characterized in that** the stacking elements (6) are arranged on a top side (9) and/or on a bottom side (10) of the receiving body (2).

8. Stackable container (1) according to claim 7, **characterized in that** two strip-shaped stacking elements (6) are provided on the top side (9) of the receiving body (2), wherein each strip-shaped stacking element (6) has at least two drainage channels (8) arranged in the region of its end regions, or that four slidably formed stacking elements (6) are arranged on the bottom side (10) of the receiving body (2), wherein each stacking element (6) in each case has at least one drainage channel (8).

9. Stackable container (1) according to one of the preceding claims, **characterized in that** the container is configured for the use as storage container and/or as transport container and/or as plant container.

10. Stackable container (1) according to one of the preceding claims, **characterized in that** on an inner side of the wall (4) facing the receiving space (5), the receiving body (2) comprises at least one fluid duct (16) communicatively connected to the at least one drainage opening (7) for guiding the liquid, wherein a first end of the fluid duct (16) is communicatively connected to the drainage opening (7), and a second end of the fluid duct (16) comprises an inlet opening (16.1) for the entry of the liquid and/or that the passage opening (15) cooperates with the inlet opening (16.1) of the fluid duct (16) of one or several container(s) to guide and drain the liquid on the inner side.

11. Stackable container (1) according to one of the preceding claims, **characterized in that** at least one shelf is further provided in the receiving space (5), wherein the shelf is retained at a predetermined position in the receiving space (5) by means of retaining webs provided for this purpose on the wall (4) of the receiving body (2).

12. An assembly comprising at least two containers (1) according to one of claims 1 to 11, stacked one on top of the other in a container stack, **characterized in that** at least a first container (1') is arranged underneath a second container (1"), and that the second container (1") is supported on the first container (1') by means of the stacking elements (6) aligned in a second position (P2).

13. Assembly according to claim 12, **characterized in that** the stacking elements (6) of the first container (1') are arranged on the top side (9) of the receiving body (2), and the drainage channels (8) of the stacking elements (6) of the first container (1') cooperate with the drainage openings (7) of the second container (1") in order to drain the moisture and/or liquid from the receiving space (5) of the second container (1").

14. Assembly according to claim 12 or 13, **characterized in that** the containers (1', 1") stacked one on top of the other in the assembly are formed to drain the liquid from the container stack on the inner side, wherein at least the receiving body (2) of the first container (1') comprises at least one fluid duct (16) having an inlet opening (16.1) on an inner side of the wall (4) facing the receiving space (5), to guide and drain the liquid on the inner side, and wherein the passage opening (15) cooperates with the inlet opening (16.1) of the fluid duct (16) of the first container (1') in such a way that the liquid is introduced into the fluid duct (16) of the first container (1') via the passage opening (15) of the stacking elements (6).

15. Assembly according to one of claims 12 to 14, wherein at least two container stacks of containers (1) stacked one on top of the other are arranged next to one another, and wherein connecting and securing elements are provided to connect the container stacks arranged next to one another and to secure them against one another.

## Revendications

1. Conteneur empilable (1), comprenant un corps de réception (2) comportant au moins un fond inférieur (3) et un espace de réception (5) délimité par le fond inférieur (3) et par une paroi (4) latérale, dans lequel le corps de réception (2) comporte des éléments d'empilage (6), placés de manière mobile et les éléments d'empilage (6) sont mobiles d'au moins d'une première position (P1) dans une deuxième position (P2), dans la première position (P1), les éléments d'empilage (6) permettant d'empiler l'un dans l'autre, et dans la deuxième position (P2), permettant d'empiler l'un sur l'autre d'au moins deux conteneurs empilables (1) de ce type, dans la zone du fond inférieur (3), le corps de réception (2) comportant au moins un orifice de drainage (7), le fond inférieur (3) du corps de réception (2) étant conçu pour absorber d'humidité et/ou de liquide présent dans l'espace de réception (5) et pour guider l'humidité et/ou le liquide absorbé en direction de l'au moins un orifice de drainage (7), au moins l'un des éléments d'empilage (6) comportant une rigole de drainage (8), qui est conçue pour absorber et pour évacuer de l'humidité et/ou du liquide, **caractérisé en ce que** les éléments d'empilage (6) comportent par ailleurs un passage (15), qui se trouve en liaison de communication avec la rigole de drainage (8), pour le guidage ciblé du liquide se trouvant dans la rigole de drainage (8) d'un premier côté (6a) des éléments d'empilage (6) vers un deuxième côté (6b) opposé des éléments d'empilage (6).

2. Conteneur empilable (1) selon la revendication 1, **caractérisé en ce que** l'au moins un orifice de drainage (7) coopère avec l'au moins une rigole de drainage (8) d'un ou de plusieurs conteneur (s) (1), pour évacuer l'humidité et/ou le liquide présent dans l'espace de réception (5).

3. Conteneur empilable (1) selon la revendication 1 ou 2, **caractérisé en ce que** le corps de réception (2) comporte plusieurs orifices de drainage (7), qui sont placés au voisinage de la paroi (4), dans le fond inférieur (3) et/ou dans une zone de raccordement de la paroi (4), sur le fond inférieur (3), et/ou **en ce que** le fond inférieur (3) est conçu en étant incliné ou voûté.

4. Conteneur empilable (1) selon la revendication 3, **caractérisé en ce que** le fond inférieur (3) comprend au moins deux segments (3.1, 3.2) de fond inférieur inclinés, se raccordant l'un sur l'autre, les segments (3.1, 3.2) de fond inférieur se raccordant l'une sur l'autre sur un point de niveau plus élevé et déclinant chacun avec un angle d'inclinaison prédéfini en direction de la paroi (4), vers un point de niveau moins élevé.

5. Conteneur empilable (1) selon l'une quelconque des revendications précédentes, **caractérisé en ce que** le corps de réception (2) est conçu sensiblement sous la forme d'un tronc de pyramide, doté d'une surface de base polygonale, notamment rectangulaire, de préférence quadratique et de segments de paroi (4.1, 4.2, 4.3, 4.4) latérale, se raccordant l'une sur l'autre ou **en ce que** le corps de réception (2) est conçu sensiblement sous la forme d'un cône tronqué, doté d'une surface de base ronde ou ovale, dans la paroi (4) du corps de réception (2) étant conçu au moins un ajour (11).

6. Conteneur empilable (1) selon l'une quelconque des revendications précédentes, **caractérisé en ce que** dans la paroi (4) sont conçus des orifices d'aération (12) et/ou **en ce que** sur un côté qui fait face à l'espace de réception (5), la paroi (4) comporte des espaceurs (13) et/ou **en ce que** les éléments d'empilage (6) sont conçus en étant déplaçables ou pivotants autour d'un axe de pivotement (SA).

7. Conteneur empilable (1) selon l'une quelconque des revendications précédentes, **caractérisé en ce que** les éléments d'empilage (6) sont placés sur un côté supérieur (9) et/ou sur un côté inférieur (10) du corps de réception (2).

8. Conteneur empilable (1) selon la revendication 7, **caractérisé en ce que** sur le côté supérieur (9) du corps de réception (2) sont prévus deux éléments d'empilage (6) en forme de baguettes, chaque élément d'empilage (6) en forme de baguette comportant au moins deux rigoles de drainage (8), placées dans la zone de ses parties d'extrémité ou **en ce que** sur le côté inférieur (10) du corps de réception (2) sont placés quatre éléments d'empilage (6) conçus pour être déplaçables, chaque élément d'empilage (6) comportant respectivement au moins une rigole de drainage (8).

9. Conteneur empilable (1) selon l'une quelconque des revendications précédentes, **caractérisé en ce que** le conteneur est aménagé pour être utilisé en tant que conteneur de stockage et/ou en tant que conteneur de transport et/ou en tant que conteneur pour plantes.

10. Conteneur empilable (1) selon l'une quelconque des revendications précédentes, **caractérisé en ce que** sur un côté intérieur de la paroi (4) qui fait face à l'espace de réception (5), le corps de réception (2) comporte au moins un canal à fluide (16) se trouvant en liaison de communication avec l'au moins un orifice de drainage (7), pour guider le liquide, une première extrémité du canal à fluide (16) se trouvant en liaison de communication avec l'orifice de drainage (7) et une deuxième extrémité du canal à fluide (16) comportant un orifice d'entrée (16.1), pour l'entrée du liquide et/ou **en ce que** le passage (15) coopère avec l'orifice d'entrée (16.1) du canal à fluide (16) d'un ou de plusieurs conteneur(s), pour le guidage côté intérieur et l'évacuation du liquide.

11. Conteneur empilable (1) selon l'une quelconque des revendications précédentes, **caractérisé en ce que** dans l'espace de réception (5) est prévue par ailleurs au moins une tablette, la tablette étant maintenue à l'aide de barrettes de maintien conçues à cet effet, prévues sur la paroi (4) du corps de réception (2) dans une position prédéfinie dans l'espace de réception (5).

12. Ensemble, comprenant au moins deux conteneurs (1) selon l'une quelconque des revendications 1 à 11, empilés l'un sur l'autre dans une pile de conteneurs, **caractérisé en ce qu'**au moins un premier conteneur (1') est placé en-dessous d'un deuxième conteneur (1") et **en ce que** le deuxième conteneur (1") est placé sur le premier conteneur (1'), à l'aide des éléments d'empilage (6) orientés dans une deuxième position (P2).

13. Ensemble selon la revendication 12, **caractérisé en ce que** les éléments d'empilage (6) du premier conteneur (1') sont placés sur le côté supérieur (9) du corps de réception (2) et **en ce que** les rigoles de drainage (8) des éléments d'empilage (6) du premier conteneur (1') coopèrent avec les orifices de drainage (7) du deuxième conteneur (1"), pour évacuer l'humidité et/ou le liquide hors de l'espace de réception (5) du deuxième conteneur (1").

14. Ensemble selon la revendication 12 ou 13, **caractérisé en ce que** les conteneurs (1', 1") empilés les uns sur les autres dans l'ensemble sont conçus pour évacuer sur le côté intérieur le liquide hors de la pile de conteneurs, sur un côté intérieur de la paroi (4) qui fait face à l'espace de réception (5), au moins le corps de réception (2) du premier conteneur (1') comportant au moins un canal à fluide (16) comportant un orifice d'entrée (16.1), pour guider sur le côté intérieur et évacuer le liquide, et le passage (15) coopérant avec l'orifice d'entrée (16.1) du canal à fluide (16) du premier conteneur (1'), de telle sorte que le liquide soit introduit par l'intermédiaire du passage (15) des éléments d'empilage (6) dans le canal à fluide (16) du premier conteneur (1').

15. Ensemble selon l'une quelconque des revendications 12 à 14, au moins deux piles de conteneurs consistant dans des conteneurs (1) empilés les uns sur les autres étant placées côte à côte et des éléments de liaison et de blocage étant prévus, pour relier et bloquer les uns par rapport aux autres les piles de conteneurs placées côte à côte.
